(19) Europäisches Patentamt
European Patent Office
Office européen des brevets

(11) **EP 2 451 121 A1**

(12) **EUROPEAN PATENT APPLICATION**
published in accordance with Art. 153(4) EPC

(43) Date of publication:
**09.05.2012 Bulletin 2012/19**

(51) Int Cl.:
***H04L 12/26*** *(2006.01)*      ***H04L 12/24*** *(2006.01)*

(21) Application number: **10791360.0**

(22) Date of filing: **20.05.2010**

(86) International application number:
**PCT/CN2010/073019**

(87) International publication number:
**WO 2010/148854 (29.12.2010 Gazette 2010/52)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **23.11.2009 CN 200910238235**

(71) Applicant: **ZTE Corporation**
**Shenzhen, Guangdong 518057 (CN)**

(72) Inventor: **BAI, Haibin**
**Shenzhen**
**Guangdong 518057 (CN)**

(74) Representative: **Manitz, Finsterwald & Partner GbR**
**Martin-Greif-Strasse 1**
**80336 München (DE)**

(54) **METHOD AND SYSTEM FOR PREESTIMATING MAXIMUM BANDWIDTH OF SUBSCRIBER LINE IN DIGITAL SUBSCRIBER LOOP**

(57) A method and a device for pre-estimating the maximum bandwidth of a subscriber line in the digital subscriber loop. The method comprises: obtaining independent crosstalk noises according to the line length of the measured subscriber line, the line transfer equation, and the power spectral density of each frequency signal in the frequency band of a Digital Subscriber loop (DSL) of other subscriber lines in the line pair where the measured subscriber line is located; obtaining total crosstalk noise with time domain superposition; according to the DSL band used by the measured subscriber line, selecting the total crosstalk noise subjected by each frequency signal in that band as well as the line attenuation; using the power spectral density of each frequency signal in that band to obtain the signal-to-noise ratio of each frequency signal in that band; and obtaining the maximum bandwidth according to the frequency domain form of the Shannon's law. The solution can exactly pre-estimate the maximum bandwidth of the subscriber line before the DSL service is actually launched.

FIG. 2

**Description**

Technical Field

The present invention relates to broadband access technology of digital subscriber loop (DSL), and more particularly, to a method and system for pre-estimating the maximum bandwidth of a subscriber line in DSL.

Background of the Related Art

With the popularity of broadband networks, the number of broadband users increases dramatically in recent years, and as one of the main access ways, the digital subscriber loop access technology obtains a wide range of sophisticated applications. The increasingly enriched types of broadband applications also drive the constant speedup of the broadband access bandwidth. However, due to the different physical factors such as the line topology, the physical quality of the line, the number of bridge joints, the maximum bandwidths for different subscriber lines to be stably launched are different; moreover, subjected to many uncertainties such as surrounding environmental noise, at different times, the maximum bandwidths of the subscriber lines might also be different. Therefore, when an access user requests to open the high-speed service, how to determine whether the maximum bandwidth of the subscriber line meets the requirements or not is very important for reducing the customer complaint rate, improving the customer satisfaction and promoting the potential markets.

In the current DSL technology, for a user who already has the DSL service, the DSL access multiplexer (DSLAM) and the DSL modem of the user terminal can be used to actually test the maximum bandwidth of the subscriber line, so as to determine whether the line meets the bandwidth requirement of the service or not. However, for those user groups that do not open the DSL yet, there is no reliable method to measure the user bandwidth, the reason is that although the current user cable is well deployed, when the service is actually opened, there is crosstalk from a plurality of other subscribers in the same bundle of cables, and the line bandwidth will be greatly reduced.

Most existing DSLAM equipments can provide single-end line test (SELT) technology which uses frequency domain reflectometry and time domain reflectometry to test line physical conditions such as the line length, the line diameter, and so on, thus it cannot consider the factors such as the crosstalk that might exist in a future line, resulting in that the bandwidth test results have little significance. Therefore, before opening the service, how to accurately estimate the actual bandwidth when the service is opened in the future becomes extremely important for the market expansion and positioning.

Summary of the Invention

In view of this, the main purpose of the present invention is to provide a method and system for pre-estimating the maximum bandwidth of a subscriber line in the digital subscriber loop to accurately estimate the maximum bandwidth that can be opened for the subscriber line before the DSL service is actually launched.

To achieve the aforementioned purpose, the technical solution of the present invention is implemented as:

a method for pre-estimating the maximum bandwidth of a subscriber line in the digital subscriber loop is provided in the present invention, and the method comprises:

obtaining independent crosstalk noises according to the line length and the line transfer equation of the measured user line, and the power spectral density of each frequency signal in the DSL band of other subscriber lines in the line pair where the measured subscriber line is located, and obtaining the total crosstalk noise after the time domain superposition;

According to the DSL frequency band used by the measured subscriber line, selecting the total crosstalk noise subjected by each frequency signal in the band as well as the line attenuation, and using the power spectral density of each frequency signal in the frequency band to get the signal to noise ratio of each frequency signal in that frequency band, and then obtaining the maximum bandwidth according to the frequency domain form of the Shannon's law.

In the aforementioned technical solution, the way for calculating the power spectral density of each frequency signal in the DSL frequency band of the other subscriber lines is specifically: selecting a power spectral density template defined in the corresponding DSL standard respectively according to the DSL frequency band used by the other subscriber lines, and using the linear interpolation to obtain the power spectral density of each frequency signal in the DSL frequency band of the other subscriber lines.

In the aforementioned solution, the specific way for measuring the line length and the line transfer equation of the measured subscriber line is: executing SELT test on the measured subscriber line, using the frequency domain reflectometry and the time domain reflectometry to measure and analyze the physical properties of the measured subscriber line, so as to obtain the line length, the line attenuation and the line transfer equation.

In the aforementioned solution, the specific way for obtaining independent crosstalk noises is : according to the power spectral density of each frequency signal in the DSL frequency band of the other subscriber lines, the number of subscribers using each DSL frequency band, as well as the measured line length and the line transfer equation, using the crosstalk calculation formula defined in the G996.1 standard to obtain the independent crosstalk noises.

In the aforementioned solution, before using the power spectral density of each frequency signal in the frequency band, the method further comprises: based on the DSL frequency band used by the measured subscriber line, selecting the power spectral density template defined in the corresponding DSL standard, and using the linear interpolation to obtain the power spectral density of each frequency signal in the frequency band.

In the aforementioned solution, the DSL frequency band comprises the asymmetric digital subscriber loop (ADSL), the second-generation asymmetric digital subscriber line (ADSL2+) and the second-generation very-high-speed digital subscriber loop (VDSL2).

The present invention provides a device for pre-estimating the maximum bandwidth of a subscriber line in the digital subscriber loop, and the device comprises: a control module, a power spectral density module, a line measurement module, a total crosstalk noise module, and a pre-estimation module; wherein,

the control module is used to send the power spectral density module the DSL frequency band used by the measured subscriber line and other subscriber lines in the line pair where the measured subscriber line is located, and to send the number of subscribers in all other DSL frequency bands except the measured subscriber line to the total crosstalk noise module; further to send the line measurement message to the line measurement module;

the power spectral density module is used to obtain the power spectral density of each frequency signal in each DSL band according to the DSL frequency bands used by the measured subscriber line and the other subscriber lines;

the line measurement module is used to execute SELT test on the measured subscriber line to obtain the line length, the line attenuation and the line transfer equation;

The total crosstalk noise module is used to obtain the independent crosstalk noises according to the power spectral density of each frequency signal in the DSL band of the other subscriber lines, the number of subscribers in the corresponding DSL frequency band, the line length and the line transfer equation, and also to obtain the total crosstalk noise with the time domain superposition;

the pre-estimation module is used to select the total crosstalk noise subjected by each frequency signal in the band and the line attenuation according to the DSL frequency band used by the measured subscriber line, to use the power spectral density of each frequency signal in the frequency band to obtain the signal to noise ratio of each frequency signal in the frequency band, and then according to the frequency domain form of the Shannon's law to obtain the maximum bandwidth.

In the aforementioned solution, the total crosstalk noise module further comprises:

an independent crosstalk noise module, used to use the crosstalk calculation formula defined in the G996.1 standard to obtain the independent crosstalk noises according to the power spectral density of each frequency signal in the DSL band of the other subscriber lines, the number of subscribers in the corresponding DSL band, as well as the line length and the line transfer equation;

a time domain superposition module, used to execute a time domain superposition on the obtained independent crosstalk noises to obtain the total crosstalk noise.

The method and system for pre-estimating the maximum bandwidth of a subscriber line in the digital subscriber loop provided in the present invention measure the physical properties of the measured subscriber line and calculate the total crosstalk noise according to the DSL frequency band applied by other subscriber lines in the line pair where the measured subscriber line is located as well as the corresponding number of subscribers, and use the Shannon's law to obtain the maximum bandwidth when the measured subscriber line is actually opened, so that before the DSL service is actually opened, the maximum bandwidth of the subscriber line can be accurately pre-estimated, thus to solve the problem that the maximum bandwidth of the not-opened-yet subscriber line cannot be pre-estimated accurately in the existing DSL technologies and to increase the success rate of service opening.

Brief Description of Drawings

FIG. 1 is a flow chart of a method for pre-estimating the maximum bandwidth of a subscriber line in the digital subscriber loop in accordance with in the present invention;

FIG. 2 is a structural diagram of a device for pre-estimating the maximum bandwidth of a subscriber line in the digital subscriber loop in accordance with in the present invention.

Preferred Embodiments of the Present Invention

The basic idea of the present invention is: acquiring independent crosstalk noises according to the line length of the measured subscriber line, the line transfer equation, as well as the power spectral density of each frequency signal in the DSL band of other subscriber lines in the line pair where the measured subscriber line is located, and acquiring the total crosstalk noise with the time domain superposition; according to the DSL frequency band used by the measured subscriber line, selecting the total crosstalk noise subjected by each frequency signal in that frequency band as well as the line attenuation, and using the power spectral density of each frequency signal band in the frequency band to get the signal to noise ratio of each frequency signal in the frequency band, and then acquiring the maximum bandwidth according to the frequency domain form of the Shannon's law.

The present invention will be described in further detail with combination of the accompanying figures and the specific embodiments.

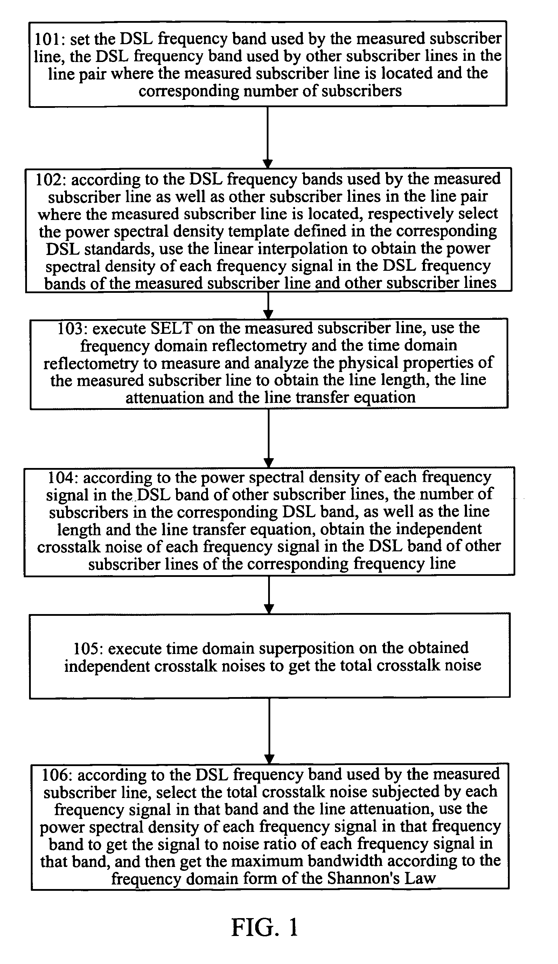

The present invention implements a method for pre-estimating the maximum bandwidth of a subscriber line of the digital subscriber loop, as shown in FIG. 1, the method comprises the following steps:

step 101: setting the DSL frequency band used by the measured subscriber line, the DSL frequency band used by other subscriber lines in the line pair where the measured subscriber line is located and the corresponding number of subscribers;

in that step, the used DSL band comprises ADSL, ADSL2 +, VDSL2, and so on.

Step 102: according to the DSL frequency bands used by the measured subscriber line as well as other subscriber lines in the line pair where the measured subscriber line is located, respectively selecting the power spectral density template defined in the corresponding DSL standards, using the linear interpolation to obtain the power spectral density of each frequency signal in the DSL frequency bands of the measured subscriber line and other subscriber lines;

Specifically, for subscribers using the ADSL, acquiring the power spectral density of each frequency signal in the ADSL band with the linear interpolation method according to the ADSL power spectral density template defined in the G992.1; for subscribers using the ADSL2+, acquiring the power spectral density of each frequency signal in the ADSL2+ band with the linear interpolation method according to the ADSL2+ power spectral density template defined in the G992.5; for subscribers using the VDSL2, acquiring the power spectral density of each frequency signal in the VDSL2 band with the linear interpolation method according to the VDSL2 power spectral density template defined in the G993.2;

wherein, the specific method for calculating the power spectral density of the signal is that:

supposing the power spectral density of the signal with the frequency being $f_1$ in the DSL band is calculated as $P_1$, the power spectral density of the signal with the frequency being $f_2$ is $P_2$, and $f_1 \leq f \leq f_2$, according to the linear interpolation, the power spectral density $S(f)$ of the signal with the frequency being $f$ is shown as Equation (1):

$$S(f) = P_2 + (f_0 - f_2) * (P_1 - P_2)/(f_1 - f_2) \quad (1)$$

by that calculation method, the power spectral density of each frequency signal can be obtained;

step 103: executing SELT on the measured subscriber line, using the frequency domain reflectometry and the time domain reflectometry to measure and analyze the physical properties of the measured subscriber line to obtain the line length, the line attenuation and the line transfer equation;

step 104: according to the power spectral density of each frequency signal in the DSL band of other subscriber lines, the number of subscribers in the corresponding DSL band, as well as the line length and the line transfer equation, obtaining the independent crosstalk noises of each frequency signal in the DSL band of other subscriber lines of the corresponding frequency line;

specifically, the crosstalk calculation formula defined in the G996.1 standard can be used to obtain the crosstalk noise of each frequency signal pair in the DSL band of other subscriber lines of the corresponding frequency line, that is, the independent crosstalk noise; wherein, when the signal frequency is *f*, the near-end crosstalk calculation is shown as Equation (2):

$$NEXT[f,n] = X_N \bullet S(f) \bullet n^{0.6} \bullet f^{\frac{3}{2}} \bullet \left(1 - \left|H(f,l)\right|^4\right) \quad (2)$$

and the far-end crosstalk calculation is shown as Equation (3):

$$FEXT[f,n,l] = X_F \bullet S(f) \bullet \left|H(f,l)\right|^2 \bullet n^{0.6} \bullet l \bullet f^2 \quad (3)$$

where, $X_N$ and $X_F$ are coupling coefficients, $S(f)$ is the signal power spectral density of the crosstalk source, $H(f,l)$ is the line transfer function, $n$ is the number of crosstalk sources, l is the measured line length, and *f* is the signal frequency; and the $S(f)$ is the power spectral density of the signal with the frequency being *f* in the DSL band of other subscriber lines in the present invention, and $n$ refers to the number of subscribers using the corresponding DSL band.

Specifically: for subscribers using the ADSL, the $S(f)$ is the power spectral density of the signal with the frequency being *f* in the ADSL band, and the $n$ refers to the number of subscribers using the ADSL; for subscribers using the ADSL2+, the $S(f)$ is the power spectral density of the signal with the frequency being *f* in the ADSL2+ band, and the n refers to the number of subscribers using the ADSL; for subscribers using the VDSL2, the $S(f)$ is the power spectral density of the signal with the frequency being *f* in the VDSL2 band, and the $n$ refers to the number of subscribers using the VDSL2.

Since all the existing DSL technologies use the frequency division multiplexing (FDM) technology, NEXT is negligible, thus the crosstalk noise described in present invention refers to FEXT unless otherwise mention.

Step 105: executing time domain superposition on the obtained independent crosstalk noises to get the total crosstalk noise;

specifically, supposing that the signal frequency of the line is f, then the independent crosstalk noise generated by the signal with the frequency *f* in the ADSL band is $F_1$, the independent crosstalk noise generated by the signal with the frequency *f* in the ADSL2+ band is $F_2$, and the independent crosstalk noise generated by the signal with the frequency *f* in the VDSL2 band is $F_3$, then time domain superposition is executed, thus the total crosstalk noise *Noise*(*f*) of the signal of the line with the frequency being *f* is shown as Equation (4):

$$Noise(f) = 10 * Log(10^{F_1/10} + 10^{F_2/10} + 10^{F_3/10}) \quad (4)$$

It should be noted that:

when *25KHz < f < 1.1MHz, Noise*(f) is the superposition of the above three noises;

when 1.1*MHz < f < 2.2MHz, Noise*(f) is the superposition of the ADSL2 + independent crosstalk noise and the VDSL2 independent crosstalk noise, that is, equation (3) does not contain the parameter $F_1$;

when *2.2MHz < f < 30MHz , Noise*(f) is only the VDSL2 independent crosstalk noise, that is, equation (3) does not contain the parameters $F_1$ and $F_2$.

Step 106: according to the DSL frequency band used by the measured subscriber line, selecting the total crosstalk noise subjected by each frequency signal in that band and the line attenuation, using the power spectral density of each frequency signal in that frequency band to get the signal to noise ratio of each frequency signal in that band, and then getting the maximum bandwidth according to the frequency domain form of the Shannon's Law;

EP 2 451 121 A1

specifically, according to the DSL frequency band used by the measured subscriber line, in the total crosstalk noise got in step 105, selecting the total crosstalk noise subjected by each frequency signal in that band as well as the line attenuation obtained in step 103, using the power spectral density of each frequency signal in that frequency band to obtain the signal to noise ratio of each frequency signal in the band, that is: when the signal frequency of the ith sub-carrier in the transmitter of the measured subscriber line is $f$, the way for calculating the signal to noise ratio $SNR(i)$ is shown as Equation (5):

$$SNR(i) = S(f) - LoopAttenuation(f) - Noise(f) \ (5)$$

where, S(f) is the power spectral density of the signal with the frequency being $f$ of the measured subscriber line, $LoopAttenuation(f)$ is the line attenuation of the signal with the frequency being $f$, and $Noise(f)$ is the total crosstalk noise of the signal with the frequency being $f$;

using the way in the aforementioned equation to calculate the signal to noise ratio of each sub-carrier in the DSL frequency band used by the measured subscriber line;

and then, according to the frequency domain form of the Shannon's Law, calculating the maximum bandwidth as shown in the following Equation (6):

$$ATTNDR = \left( \sum_{i=0}^{NSC-1} \left[ \frac{SNR(i) - snrgap - TARSNRM}{3\,dB} \right] \right) \times 4\,kbit/s \ (6)$$

where, NSC is the number of subcarriers and it is defmed by the DSL standard used by the measured subscriber line; $SNR(i)$ is the signal to noise ratio of the ith subcarrier sent by the measured subscriber line; Snrgap is the signal to noise ratio required to ensure a certain bit error rate, in the G992.5, the required bit-error rate is $10^{-7}$, at this time, the Snrgap takes the value of 9.75dB; TARSNRM is the signal to noise ratio domain degree, and its general value is 6dB.

The orders of steps 102 and 103 are interchangeable, step 103 might first be performed and then step 102, and the orders are not limited in the practical applications.

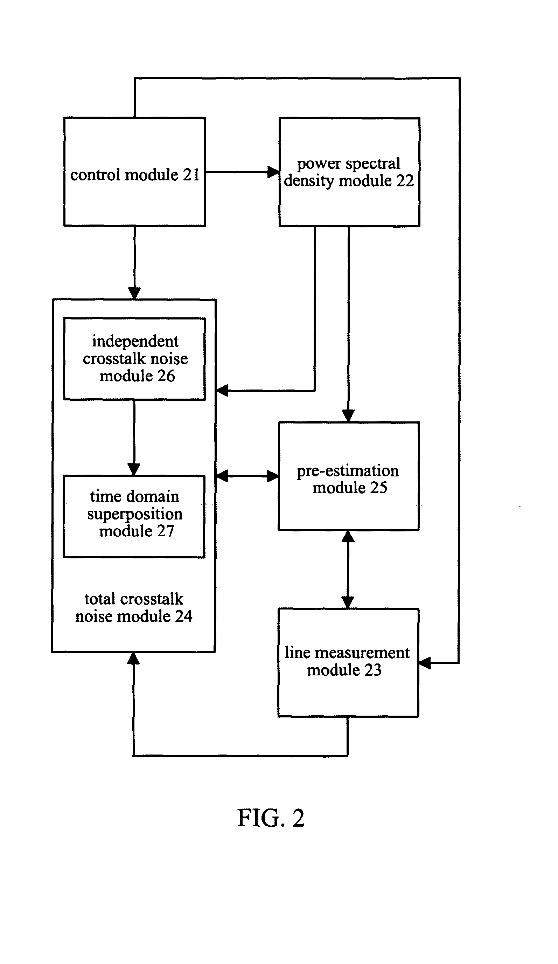

To achieve the aforementioned method, the present invention also provides a device for pre-estimating the maximum bandwidth of a subscriber line of the digital subscriber loop, as shown in FIG. 2, the device comprises: a control module 21, a power spectral density module 22, a line measurement module 23, a total crosstalk noise module 24, and a pre-estimation module 25; wherein,
the control module 21 is used to send the DSL frequency bands used by the measured subscriber line and other subscriber lines to the power spectral density module according to the DSL frequency band used by the measured subscriber line and set by the subscriber, the DSL frequency band used by other subscriber lines in the line pair where the measured subscriber line is located, and the corresponding number of subscribers; and to send the number of the subscribers in each other DSL frequency band except the measured subscriber line to the total crosstalk noise module; it is also used to send the line measurement message to the line measurement module;
the power spectral density module 22 is used to respectively select the power spectral density template defined in the corresponding DSL standard according to the DSL frequency bands used by the measured subscriber line and other subscriber lines, and to use the linear superposition to obtain the power spectral density of each frequency signal in the DSL frequency band of the measured subscriber line and the other subscriber lines;
the line measurement module 23 is used to execute SELT on the measured subscriber line to obtain the line length, the line attenuation and the line transfer equation after receiving the measurement message;
the total crosstalk noise module 24 is used to obtain the independent crosstalk noises according to the power spectral density of each frequency signal in the DSL band of other subscriber lines, the number of subscribers in the corresponding DSL frequency band, the line length and the line transfer equation, so as to obtain the total crosstalk noise after the time domain superposition;
the pre-estimation module 25 is used to select the total crosstalk noise subjected by each frequency signal in that band and the line attenuation according to the DSL frequency band used by the measured subscriber line, to use the power spectral density of each frequency signal in that frequency band to obtain the signal to noise ratio of each frequency signal in that frequency band, and then according to the frequency-domain form of the Shannon's law to obtain the

6

maximum bandwidth;

furthermore, the total crosstalk noise module 24 further comprises an independent crosstalk noise module 26 and a time domain superposition module 27; wherein,

the independent crosstalk noise module 26 is used to use the crosstalk calculation formula defined in the G996.1 standard to obtain the independent crosstalk noises according to the power spectral density of each frequency signal in the DSL band of other subscriber lines and the number of subscribers in the corresponding DSL band, as well as the line length and the line transfer equation;

the time-domain superposition module 27 is used to execute time domain superposition on the obtained independent crosstalk noises to obtain the total crosstalk noise.

The above description is only the preferred embodiment of the present invention rather than the restriction of the scope of the claims of the present invention, and all the modification, equivalent alternatives and improvements made without departing from the spirit and essence of the present invention should belong to the scope of the claims of the present invention.

## Claims

1.   A method for pre-estimating a maximum bandwidth of a subscriber line in a digital subscriber loop (DSL), comprising:

obtaining independent crosstalk noises according to a line length and a line transfer equation of a measured user line, and a power spectral density of each frequency signal in a DSL frequency band of other subscriber lines in a line pair where the measured subscriber line is located, and obtaining a total crosstalk noise after a time domain superposition;

according to the DSL frequency band used by the measured subscriber line, selecting the total crosstalk noise subjected by each frequency signal in that band as well as line attenuation, and using the power spectral density of each frequency signal in that frequency band to get a signal to noise ratio of each frequency signal in that frequency band, and then obtaining a maximum bandwidth according to a frequency domain form of Shannon's law.

2.   The method for pre-estimating of claim 1, wherein, a way for calculating the power spectral density of each frequency signal in the DSL frequency band of the other subscriber lines is specifically: respectively selecting a power spectral density template defined in a corresponding DSL standard according to the DSL frequency band used by the other subscriber lines, and using linear interpolation to obtain the power spectral density of each frequency signal in the DSL frequency band of the other subscriber lines.

3.   The method for pre-estimating of claim 1, wherein, a way for measuring the line length and the line transfer equation of the measured subscriber line is specifically: executing a single-end line test (SELT) on the measured subscriber line, using a frequency domain reflectometry and a time domain reflectometry to measure and analyze physical properties of the measured subscriber line, so as to obtain the line length, the line attenuation and the line transfer equation.

4.   The method for pre-estimating of claim 1, wherein, a way for obtaining independent crosstalk noises is specifically: according to the power spectral density of each frequency signal in the DSL frequency band of the other subscriber lines, a number of subscribers using each DSL frequency band, as well as the measured line length and the line transfer equation, using a crosstalk calculation formula defined in G996.1 standard to obtain the independent crosstalk noises.

5.   The method for pre-estimating of claim 1, wherein, before using the power spectral density of each frequency signal in that frequency band, the method further comprises: based on the DSL frequency band used by the measured subscriber line, selecting the power spectral density template defined in the corresponding DSL standard, and using the linear interpolation to obtain the power spectral density of each frequency signal in that frequency band.

6.   The method for pre-estimating of any one of claims 1-5, wherein, the DSL frequency band comprises an asymmetric digital subscriber loop (ADSL), a second-generation asymmetric digital subscriber line (ADSL2+) and a second-generation very-high-speed digital subscriber loop (VDSL2).

7.   A device for pre-estimating a maximum bandwidth of a subscriber line in a digital subscriber loop (DSL), comprising: a control module, a power spectral density module, a line measurement module, a total crosstalk noise module, and a pre-estimation module; wherein,

the control module is used to send DSL frequency bands used by a measured subscriber line and other subscriber lines in a line pair where the measured subscriber line is located to the power spectral density module, and to send a number of subscribers in each other DSL frequency band except the measured subscriber line to the total crosstalk noise module; and also used to send line measurement message to the line measurement module;

the power spectral density module is used to obtain a power spectral density of each frequency signal in each DSL band according to the DSL frequency bands used by the measured subscriber line and the other subscriber lines;

the line measurement module is used to execute a single-end line test (SELT) on the measured subscriber line to obtain a line length, line attenuation and a line transfer equation;

the total crosstalk noise module is used to obtain independent crosstalk noises according to the power spectral density of each frequency signal in the DSL band of the other subscriber lines, a number of subscribers in a corresponding DSL frequency band, the line length and the line transfer equation, and to obtain a total crosstalk noise after a time domain superposition;

the pre-estimation module is used to select the total crosstalk noise subjected by each frequency signal in the band and the line attenuation according to the DSL frequency band used by the measured subscriber line, to use the power spectral density of each frequency signal in that frequency band to obtain a signal to noise ratio of each frequency signal in that frequency band, and then to obtain a maximum bandwidth according to a frequency domain form of Shannon's law.

8. The device for pre-estimating of claim 7, wherein, the total crosstalk noise module further comprises:

an independent crosstalk noise module, used to use a crosstalk calculation formula defined in G996.1 standard to obtain the independent crosstalk noises according to the power spectral density of each frequency signal in the DSL frequency band of the other subscriber lines, a number of subscribers in a corresponding DSL band, as well as the line length and the line transfer equation;

a time domain superposition module, used to execute a time domain superposition on the obtained independent crosstalk noises to obtain the total crosstalk noise.

101: set the DSL frequency band used by the measured subscriber line, the DSL frequency band used by other subscriber lines in the line pair where the measured subscriber line is located and the corresponding number of subscribers

102: according to the DSL frequency bands used by the measured subscriber line as well as other subscriber lines in the line pair where the measured subscriber line is located, respectively select the power spectral density template defined in the corresponding DSL standards, use the linear interpolation to obtain the power spectral density of each frequency signal in the DSL frequency bands of the measured subscriber line and other subscriber lines

103: execute SELT on the measured subscriber line, use the frequency domain reflectometry and the time domain reflectometry to measure and analyze the physical properties of the measured subscriber line to obtain the line length, the line attenuation and the line transfer equation

104: according to the power spectral density of each frequency signal in the DSL band of other subscriber lines, the number of subscribers in the corresponding DSL band, as well as the line length and the line transfer equation, obtain the independent crosstalk noise of each frequency signal in the DSL band of other subscriber lines of the corresponding frequency line

105: execute time domain superposition on the obtained independent crosstalk noises to get the total crosstalk noise

106: according to the DSL frequency band used by the measured subscriber line, select the total crosstalk noise subjected by each frequency signal in that band and the line attenuation, use the power spectral density of each frequency signal in that frequency band to get the signal to noise ratio of each frequency signal in that band, and then get the maximum bandwidth according to the frequency domain form of the Shannon's Law

## FIG. 1

FIG. 2

| | |
|---|---|
| **INTERNATIONAL SEARCH REPORT** | International application No. |
| | PCT/CN2010/073019 |

**A. CLASSIFICATION OF SUBJECT MATTER**

see the extra sheet
According to International Patent Classification (IPC) or to both national classification and IPC

**B. FIELDS SEARCHED**

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

EPODOC; WPI; CNPAT; CNKI

bandwidth, maximum, maximal, predict, estimate, noise, line

**C. DOCUMENTS CONSIDERED TO BE RELEVANT**

| Category* | Citation of document, with indication, where appropriate, of the relevant passages | Relevant to claim No. |
|---|---|---|
| A | CN1535506A (QUALCOMM INC) 06 Oct. 2004(06.10.2004) the whole document | 1-8 |
| A | WO02069580A1 (MEASURE TECHNOLOGY IRELAND LTD) 06 Sep. 2002(06.09.2002) the whole document | 1-8 |

☐ Further documents are listed in the continuation of Box C. ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 17 Aug. 2010(17.08.2010) | **02 Sep. 2010 (02.09.2010)** |

| Name and mailing address of the ISA/CN | Authorized officer |
|---|---|
| The State Intellectual Property Office, the P.R.China 6 Xitucheng Rd., Jimen Bridge, Haidian District, Beijing, China 100088 Facsimile No. 86-10-62019451 | **DU, Yi** Telephone No. (86-10)62411635 |

Form PCT/ISA /210 (second sheet) (July 2009)

## INTERNATIONAL SEARCH REPORT
### Information on patent family members

| | | International application No. |
|---|---|---|
| | | PCT/CN2010/073019 |

| Patent Documents referred in the Report | Publication Date | Patent Family | Publication Date |
|---|---|---|---|
| CN1535506A | 06.10.2004 | WO02099991A1 | 12.12.2002 |
| | | US2002186788A1 | 12.12.2002 |
| | | AU2002310329A1 | 16.12.2002 |
| | | MXPA03011162A | 01.03.2004 |
| | | INCHENP200301912EE | 11.12.2004 |
| | | US7039138B2 | 02.05.2006 |
| | | MX241007B | 11.10.2006 |
| | | CN100505569CC | 24.06.2009 |
| | | IN237680B | 08.01.2010 |
| WO02069580A1 | 06.09.2002 | EP1364493A1 | 26.11.2003 |
| | | AU2001235922A1 | 12.09.2002 |
| | | US2005100009A | 12.05.2005 |
| | | US7342923B2 | 11.03.2008 |

Form PCT/ISA /210 (patent family annex) (July 2009)

## INTERNATIONAL SEARCH REPORT

International application No.

PCT/CN2010/073019

Continuation of: A. CLASSIFICATION OF SUBJECT MATTER

H04L 12/26 (2006.01) i
H04L 12/24(2006.01) i